# EUROPEAN PATENT SPECIFICATION

(11) **EP 2 609 673 B1**
(45) Date of publication and mention of the grant of the patent: **25.02.2015**
(21) Application number: 11748480.8
(22) Date of filing: 04.07.2011
(51) Int. Cl.: H02K 3/26, H02K 21/24

(54) **ELECTRIC MOTOR**
ELEKTROMOTOR
MOTEUR ÉLECTRIQUE

(30) Priority: 23.08.2010 SI 201000251
(43) Date of publication of application: 03.07.2013
(73) Proprietor: Siop Elektronika d.o.o., 4243 Brezje (SI)
(72) Inventor: FRANTAR, Janez, 4243 Brezje (SI)
(74) Representative: Borstar, Dusan
(86) International application number: PCT/SI2011/000035
(87) International publication number: WO 2012/026889

(56) References cited:
- DE-C- 832 452
- US-A- 3 231 774
- US-A- 3 668 452
- US-A1- 2006 244 320

## Description

The invention belongs to electric motors characterized by construction of windings, namely motors with windings consisting of printed conductors.

The invention is based on the problem, how to design a simple, easy and small shaped electric motor, namely a brushless motor which can be electronically commutated and is able to start regardless to each initial position of its rotor, by which moreover the power can be controlled electronically and the turning speed can be adjusted continuously.

Development of electric vehicles has generated the need on further improvements of the existing electric motors. Integration of the electric motor into a vehicle leads to adaptation of the concept and the operation mode of the electric motor to certain conditions, which essentially differ from those related to powering any other machines or appliances by means of electric motor. In vehicles, the electric motor is preferably integrated within the wheel and is therefore desired that the motor is light and small shaped, by which the inertia forces can be smaller and also the risk of damages of the motor or vehicle due to potential impact and shocks during the driving may be correspondingly lower. In addition to that, the problem of starting the electric motor is present by using it in the vehicles, since upon each stop the rotor or stator windings are located in different and quite undefined position with respect to position of corresponding magnets, with which said windings should cooperate. Whenever the winding and the corresponding magnet are located too far away from each other, the electric engine is then unable to start and the vehicle is unable to move from its initial position.

Similar requirements arise in several other machines like laundry machines, electric mowers or the like, where an electric motor should be essentially flat and should be a brushless motor with the possibility of electronic commutation.

Electric motor with printed windings, namely with windings on the basis of printed conductors, is described in JP 2008-180400 or US 2010/0007230 A1 respectively. Such motor comprises a disc-shaped housing, within which a shaft is embedded together with a rotor. A cylindrical section with magnets arranged equidistantly along its circumference is foreseen within said housing and extends coaxially with the shaft. Said rotor is mounted on the shaft and comprises a cylindrical circumferential surface, which is also coaxial with the shaft and on which electric windings in the form of printed conductors are equidistantly arranged.

When said windings arc connected with an electric energy source, each winding is functioning as an electric magnet, which is adapted to cooperate with magnets on said surface within the housing, by which the torque is generated which is used for the purposes of rotating the shaft. Despite to the fact that magnets require a relatively small surface area in the axial direction, the width of such casing is still pretty large and is by taking into consideration a required power of such motor practically on the border of admissibility with respect to integration of such motor within a vehicle wheel.

When such motor is integrated into a vehicle wheel and when the electricity supply is terminated, the wheel may be stopped in various positions, so that each printed conductor winding is then located in a random position at certain distance apart from each adjacent magnet. When the position of each particular printed contact and the position of the adjacent magnet are located insufficiently close to each other, upon re-establishing the electricity the motor cannot be efficiently started. Minimizing such problem is possible by means of increasing the number of printed contact and the number of magnets, which however results in much more complicated manufacturing of such motor and also increasing the risk of failures and damages. In fact, said problem cannot be completely eliminated despite to essentially increasing the number of magnets and printed contacts. In addition to that, still further deficiencies of such motors result from a complicated regulation of the turning velocity, torque and power, and also from cooling efficiency, in particular in high-power motors.

Further prior-art motors are disclosed in US 2006/0244320, US 3 231 774 and US 3 668 452.

The present invention refers to an electric motor as defined in the independent claim 1. Further embodiments of the invention are claimed in the dependent claims 2 and 3.

The invention relates to an electric motor, which comprises a housing consisting of a non-magnetic material, within which a shaft is embedded, to which a winding assembly is attached with the possibility of torque transmission, said winding assembly comprises conductors which are adapted to cooperate with a magnetic assembly which is furnished with magnets and is firmly attached to the housing.

In accordance with the invention, said magnetic assembly comprises a predetermined number of magnets, which are attached to at least two plate-like discs, optionally rings, which are attached to the housing and are spaced apart from each other in the axial direction of the shaft, wherein on each disc said magnets extend radially with respect of each corresponding disc and are equidistantly spaced apart from each other in the circumferential direction of the disc, and at least one winding disc is inserted within the gap between each pair of neighboring discs with magnets, wherein each winding disc is formed of a multi-layer printed conductor which belongs to said winding assembly and is with the possibility of torque transmission attached to the shaft and adapted to cooperate with magnets on each neighboring magnetic disc, wherein each winding disc consists of at least two printed conductor layers, each layer consisting of electric insulating material, onto which mesh-shaped electric conductors in the form of electric conductive layer are applied on that surface which is faced towards said magnets, and wherein each conductor comprises at least one radial section, which extends radially with respect to the winding disc and is adapted to cooperate with said magnets of each neighboring magnetic disc, and wherein the conductors are interconnected with each other by means of appropriate connectors. Said connectors are interconnected by means of connectors, which extend throughout each disc.

Each conductor in the form of a surface layer consisting of an electric conductive material comprises at least one radial section, which extends radially with respect to said winding disc and is adapted to cooperate with said magnets, and moreover in addition to said radially extending section also a further section which extends in the circumferential direction of said winding disc.

Moreover, a Hall sensor is integrated on at least one winding disc of the winding assembly in the area between the conductors, wherein said sensor is able to detect the magnetic field. According to the invention it is furthermore preferred, if the shaft is a hollow shaft. Such, the conductors can be supplied with electricity by means of supply wires, which are extending throughout the shaft, and also the sensor may then wired throughout the shaft. Still further, said magnets are permanent magnets.

In the most preferred embodiment of the invention three equidistantly spaced magnetic discs are available within the housing, wherein each magnetic disc is furnished with magnets on that side(s) which is/are faced towards the other two magnetic discs, and in the gaps between said magnetic discs two winding discs are inserted, which belong to the winding assembly and each of them consists of at least two layers in the form of printed conductors, wherein each layer is furnished with conductors, which are integrated therein and include radial sections, which are adapted to cooperate with said magnets and are offset in the circumferential direction of the winding disc relatively to radial sections integrated within each neighboring layer. Said radial sections of the conductors within all disposable layers are offset in such a manner that the radial sections of all layers are arranged at an uniform distance apart from each other i.e. equidistantly in the circumferential direction of each winding disc consisting of said layers.

The invention will be disclosed in more detail by means of an embodiment, which is shown in the enclosed drawing, wherein
- Fig. 1: is a schematically presented cross-section through the electric motor along the diametrical plane;
- Fig. 2: is a schematic presentation of the housing incl. arrangement of magnets;
- Fig. 3: is a rotor together in the form of multi-layer printed conductor together with corresponding windings; and
- Figs 4a - 4c: is a schematic presentation of particular layers, wherein the windings are offset with respect to each other.

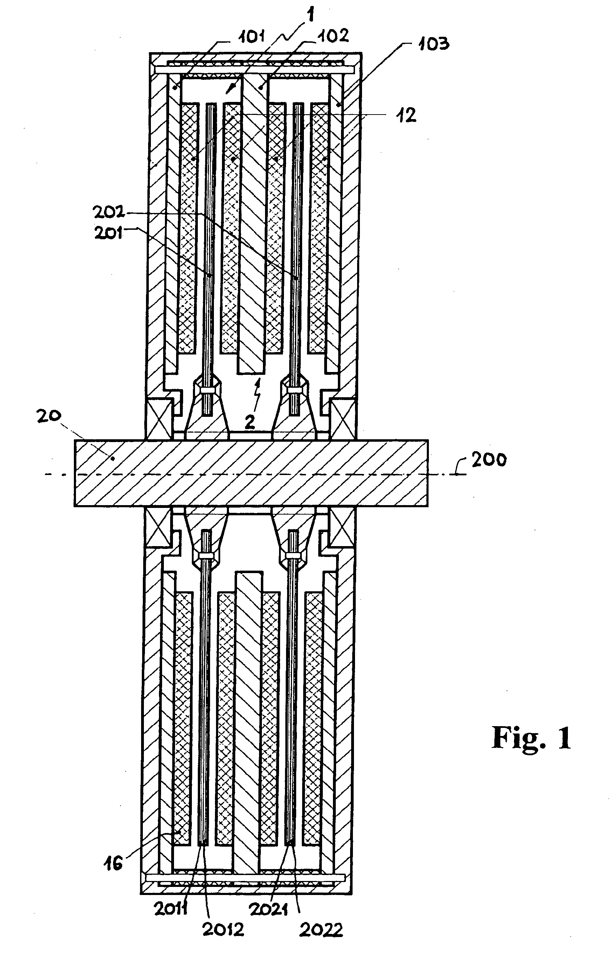

As shown in Fig. 1, an electric motor according to the invention comprises an essentially flat cylindrical housing 10, within which on the one hand a magnetic assembly 1 is arranged and on the other hand a shaft 20 is mounted, on which a winding assembly 2 consisting of two or more printed conductor layers is attached with the possibility of torque transmission.

In the context of defining the shape of said housing 1, the expression "flat" should be understood to determine such a housing 1, in which the thickness i.e. the width is essentially smaller than the diameter thereof.

By taking into consideration a basic concept of the electric motor according to the invention, where appropriate stator is available together with a rotor which is rotatable relatively with respect to said stator around their common geometric axis, said housing 10 together with each belonging magnetic assembly 1 may be used as the rotor, while the shaft 20 together with the winding assembly 2 arranged thereon can be used as the stator, or vice versa, that the housing 10 together with each belonging magnetic assembly 1 is used as the stator and the winding assembly 2 is used as the rotor.

In a preferred embodiment according to Fig. 1, a winding assembly 2 in the form of a multi-layer printed conductor is used as the stator, while the housing 10 together with corresponding magnetic assembly 1 is used as the rotor. Such electric motor is suitable for mounting directly into a vehicle wheel or into electric mower or into a laundry machine or optionally also into any other electrically powered machines or appliances.

In the shown embodiment, the housing 10 is made of aluminium or any other non-magnetic material. The magnetic assembly 1 is formed by a predetermined number of magnets 11, 12, 13, 14, 15, 16, 17, 18 which are permanent magnets and which are by means of adhesive or any other means attached onto corresponding flat magnetic discs 101, 102, 103 or optionally rings, which are attached to the housing 10 and are equidistantly spaced apart from each other in the axial direction of the shaft 20, wherein the magnets 11, 12, 13, 14, 15, 16, 17, 18 on each magnetic disc 101, 102, 103 extend radially with respect to the magnetic disc 101, 102, 103 and are equidistantly spaced apart from each other in the circumferential direction of the magnetic disc 101, 102, 103.

Three magnetic discs 101, 102, 103 with magnets 11, 12, 13, 14, 15, 16, 17, 18 are foreseen in the shown embodiment, and two gaps are available therebetween. In general, such motor can also be furnished with two magnetic discs 101, 102 only and a single gap between them, or may also comprise more than three magnetic discs 101, 102, 103 and a corresponding number of gaps between each disposable magnetic discs 101, 102, 103. Both lateral magnetic discs 101, 103 arranged adjacent to the housing 10 are normally furnished with magnets 11, 12, 13, 14, 15, 16, 17, 18 only on that surface, which is faced towards the other lateral magnetic disc 101, 103. Any other magnetic discs 102 which may be available between said lateral discs 101, 103 are furnished with magnets 11, 12, 13, 14, 15, 16, 17, 18 on both opposite sides thereof.

The rotation velocity of the rotor depends on the number of available magnets 11, 12, 13, 14, 15, 16, 17, 18, while the torque depends on the diameter, on which these are arranged with respect to the geometric axis 200 of the shaft 20.

A winding disc 201, 202 consisting of multi-layer printed conductor and belonging to said winding assembly 2 is inserted within each gap between each two neighboring magnetic discs 101, 102, 103 which are furnished with magnets 11, 12, 13, 14, 15, 16, 17, 18, wherein said winding disc 201, 202 is adapted to cooperate with magnets 11, 12, 13, 14, 15, 16, 17, 18 which are available on each neighboring magnetic disc 101, 102, 103. Said winding assembly 2 is namely functioning in the same manner like each disposable electric winding in a classic electric motor.

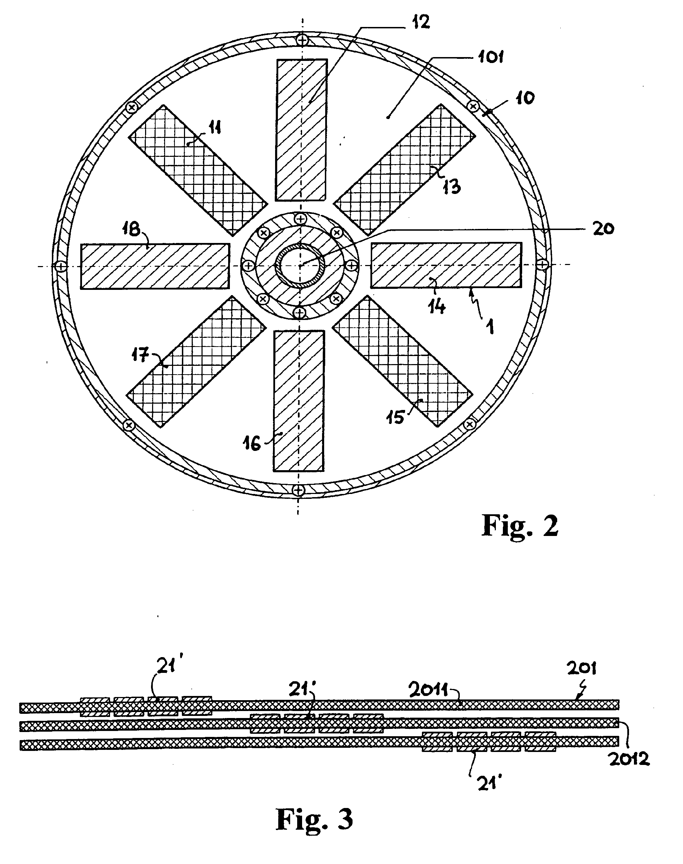

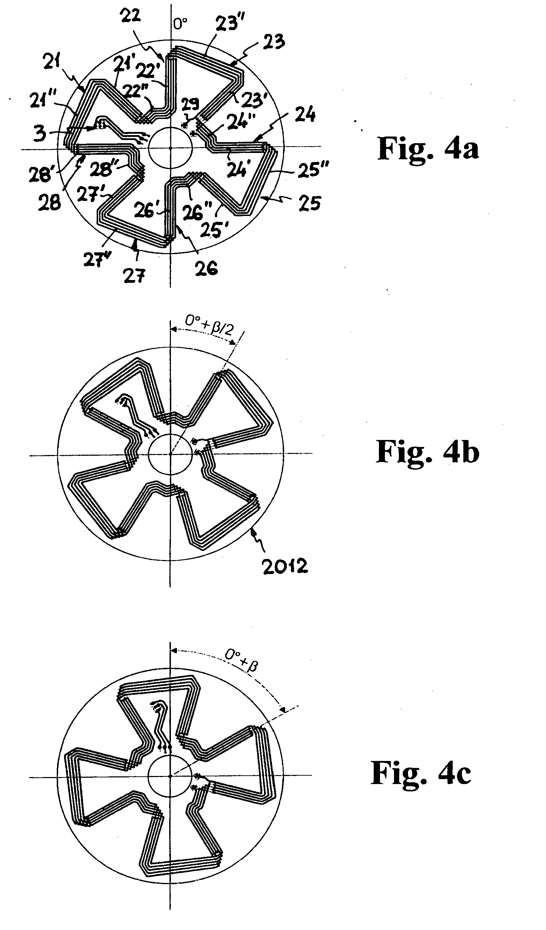

Each winding disc 201, 202 consists of at least two layers 2011, 2012; 2021, 2022 of printed conductor. Each layer 2011, 2012; 2021, 2022 consists of electric insulating material, which is on its surface faced towards the magnets 11, 12, 13, 14, 15, 16, 17, 18 coated with mesh-shaped electric conductors 21, 22, 23, 24, 25, 26, 27, 28 in the form of a surface layer consisting of copper or aluminium or any other electric conductive material, wherein each conductor comprises at least one with respect to the winding disc 201, 202 radially extending section 21', 22', 23', 24', 25', 26', 27', 28', which is adapted to cooperate with each corresponding magnet 11, 12, 13, 14, 15, 16, 17, 18 on each neighboring magnetic disc 101, 102, 103, and moreover also a circular section 21", 22", 23", 24", 25", 26", 27", 28". Arrangement of said conductors 21, 22, 23, 24, 25, 26, 27, 28 is shown in Figs. 3 and 4a - 4c. Conductors 21, 22, 23, 24, 25, 26, 27, 28 are electrically interconnected by means of appropriate connectors, which extend throughout each particular winding disc 201, 202 and are supplied with electricity via appropriate supplying conductors extending throughout the shaft 20, which may of that reason be a hollow shaft.

The invention further provides that the layers 2011, 2012, 2021, 2022 on each winding disc 201, 202 are offset in the circumferential direction of the winding disc 201, 202 (Fig. 4a - 4b), so that the radial sections 21', 22', 23', 24', 25', 26', 27', 28' of the conductors 21, 22, 23, 24, 25, 26, 27, 28 on different layers 2011, 2012; 2021, 2022 are not aligned to each other but are equidistantly spaced at the distance β apart from each other in the circumferential direction.

Moreover, a so-called Hall-sensor 3 is according to the invention integrated in the winding i.e. in the area of said conductors 21, 22, 23, 24, 25, 26, 27, 28 and is preferably also supplied throughout the shaft 20, wherein said sensor is intended for identifying each particular position of said conductors 21, 22, 23, 24, 25, 26, 27, 28, by which then each required polarity of generated voltage can be electronically determined. The revolution rate of the motor can be controlled within the complete range between 0 and 100%.

Consequently, the invention provides an electric motor with permanent magnets 11, 12, 13, 14, 15, 16, 17, 18 arranged within the housing 10, which is preferably functioning as the rotor, while the multi-layer winding 2 is functioning as the stator. Each particular position of magnets 11, 12, 13, 14, 15, 16, 17, 18 is detected by means of the sensor 3. Such motor is a brushless motor with the possibility of electronic commutation, by which also the current throughout the motor is controlled. Thanks to the concept of the housing 10 and the winding assembly 2, the engine is essentially flat and is therefore suitable for mounting into vehicles and various other electric appliances. Whenever such motor is mounted into a vehicle for the purposes of functioning as a central engine, there is no need to furnish such vehicle with a blocking differential, and electronic regulation of the transmission ration is also possible. Conductors 21, 22, 23, 24, 25, 26, 27, 28 can be cooled in an extremely efficient manner, which means that the motor can be supplied with correspondingly higher electric current. The power of the electric motor can be increased by means of increasing the number of winding discs 201, 202, or may also be controlled by means of directing the power supply to each desired number of winding discs 201, 202 only.

## Claims

1. Electric motor, namely an electronically commutated brushless motor, comprising an essentially flat cylindrical housing (10) consisting of a non-magnetic material, within which a shaft (20) is embedded, to which a winding assembly (2) is attached with the possibility of torque transmission, which winding assembly (2) comprises conductors (21, 22, 23, 24, 25, 26, 27, 28) which are adapted to cooperate with a magnetic assembly (1) which is furnished with magnets (11, 12, 13, 14, 15, 16, 17, 18) and is firmly attached to the housing (10), wherein said magnetic assembly (1) comprises a pre-determined number of permanent magnets (11, 12, 13, 14, 15, 16, 17, 18) which are attached to at least two plate-like magnetic discs (101, 102, 103), optionally rings, which are attached to the housing (10) and are spaced apart from each other in the axial direction of the shaft (20), and wherein on each magnetic disc (101, 102, 103) said magnets (11, 12, 13, 14, 15, 16, 17, 18) extend radially with respect of each corresponding magnetic disc (101, 102, 103), and wherein at least one winding disc (201, 202) is inserted within the gap between each pair of neighboring magnetic discs (101, 102, 103) with magnets (11, 12, 13, 14, 15, 16, 17, 18) and is with the possibility of torque transmission attached to the shaft (20) and adapted to cooperate with magnets (11, 12, 13, 14, 15, 16, 17, 18) on each neighboring magnetic disc (101, 102, 103), **characterized in that** magnets (11, 12, 13, 14, 15, 16, 17, 18) on each magnetic disc (101, 102, 103) are equidistantly spaced apart from each other in the circumferential direction of the magnetic disc (101, 102, 103), where each winding disc (201, 202) is formed of a multi-layer printed conductor which belongs to said winding assembly (2), wherein each winding disc (201, 202) consists of at least two printed conductor layers (2011, 2012; 2021, 2022), each layer (2011, 2012; 2021, 2022) consisting of electric insulating material, onto which mesh-shaped electric conductors (21, 22, 23, 24, 25, 26, 27, 28) in the form of electric conductive layer are applied on that surface which is faced towards said magnets (11, 12, 13, 14, 15, 16, 17, 18), and wherein each conductor (21, 22, 23, 24, 25, 26, 27, 28) in the form of a surface layer consisting of an electric conductive material comprises at least one radial section (21', 22', 23', 24', 25', 26', 27', 28') which extends radially with respect to said winding disc (201, 202) and is adapted to cooperate with magnets (11, 12, 13, 14, 15, 16, 17, 18), and in addition to said radially extending section also a further section (21", 22", 23", 24", 25", 26", 27", 28") which extends in the circumferential direction of the winding disc (201, 202), and wherein the conductors (21, 22, 23, 24, 25, 26, 27, 28) are interconnected with each other by means of appropriate connectors (29), which extend throughout each corresponding winding disc (201, 202), and **in that** a Hall sensor (3) is integrated on at least one winding disc (201, 202) of the winding assembly (2) in the area between the conductors (21, 22, 23, 24, 25, 26, 27, 28), wherein said sensor (3) is able to detect the magnetic field.

2. Electric motor according to Claim 1, **characterized in that** three equidistantly spaced magnetic discs (101, 102, 103) are available within the housing (10), wherein each magnetic disc (101, 102, 103) is furnished with magnets (11, 12, 13, 14, 15, 16, 17, 18) on that side(s) which is/are faced towards the other two magnetic discs (101, 102, 103), wherein in the gaps between said magnetic discs (101, 102, 103) two winding discs (201, 202) are inserted, which belong to the winding assembly (2) and each of them consists of at least two layers (2011, 2012; 2021, 2022) in the form of printed conductors, wherein each layer (2011, 2012; 2021, 2022) is furnished with conductors (21, 22, 23, 24, 25, 26, 27, 28), which are integrated therein and include radial sections (21', 22', 23', 24', 25', 26', 27', 28'), which are adapted to cooperate with said magnets (11, 12, 13, 14, 15, 16, 17, 18) and are offset in the circumferential direction of the winding disc (201, 202) relatively to radial sections (21', 22', 23', 24', 25', 26', 27', 28') integrated within each neighboring layer (2011, 2012; 2021, 2022).

3. Electric motor according to Claim 2, **characterized in that** the radial sections (21', 22', 23', 24', 25', 26', 27', 28') of the conductors (21, 22, 23, 24, 25, 26, 27, 28) within all disposable layers (2011, 2012; 2021, 2022) are offset in such a manner that the radial sections (21', 22', 23', 24', 25', 26', 27', 28') of all layers are arranged at an uniform distance (β) apart from each other i.e. equidistantly in the circumferential direction of each winding disc (201, 202) which consists of said layers (2011, 2012; 2021, 2022).

## Patentansprüche

1. Elektromotor, und zwar ein elektronisch kommutierter bürstenloser Motor, der ein im Wesentlichen flaches zylindrisches Gehäuse (10) umfasst, das aus einem nicht-magnetischen Material besteht, in das eine Welle (20) eingebettet ist, an dem eine Wicklungsanordnung (2) mit der Möglichkeit der Drehmomentübertragung angebracht ist, wobei die Wicklungsanordnung (2) Leiter (21, 22, 23, 24, 25, 26, 27, 28) umfasst, die dafür ausgebildet sind, mit einer magnetischen Anordnung (1) zusammenzuwirken, die mit Magneten (11, 12, 13, 14, 15, 16, 17, 18) versehen ist und fest an dem Gehäuse (10) angebracht ist, wobei die magnetische Anordnung (1) eine zuvor festgelegte Anzahl von Dauermagneten (11, 12, 13, 14, 15, 16, 17, 18) umfasst, die an mindestens zwei plattenartigen magnetischen Scheiben (101, 102, 103), optional Ringen, angebracht sind, die an dem Gehäuse (10) angebracht sind und in der axialen Richtung der Welle (20) voneinander beabstandet sind, und wobei sich an jeder magnetischen Scheibe (101, 102, 103) die Magneten (11, 12, 13, 14, 15, 16, 17, 18) radial mit Bezug auf jede entsprechende magnetische Scheibe (101, 102, 103) erstrecken, und wobei mindestens eine Wicklungsscheibe (201, 202) in den Spalt zwischen jedem Paar benachbarter magnetischer Scheiben (101, 102, 103) mit Magneten (11, 12, 13, 14, 15, 16, 17, 18) eingesetzt ist und mit der Möglichkeit der Drehmomentübertragung an der Welle (20) angebracht und dafür ausgebildet ist, mit Magneten (11, 12, 13, 14, 15, 16, 17, 18) auf jeder benachbarten magnetischen Scheibe (101, 102, 103) zusammenzuwirken, **dadurch gekennzeichnet, dass** Magneten (11, 12, 13, 14, 15, 16, 17, 18) auf jeder magnetischen Scheibe (101, 102, 103) in der Umfangsrichtung der magnetischen Scheibe (101, 102, 103) gleichmäßig voneinander beabstandet sind, wobei jede Wicklungsscheibe (201, 202) durch einen mehrschichtigen gedruckten Leiter gebildet wird, der zu der Wicklungsanordnung (2) gehört, wobei jede Wicklungsscheibe (201, 202) aus mindestens zwei gedruckten Leiterschichten (2011, 2012; 2021, 2022) besteht, wobei jede Schicht (2011, 2012; 2021, 2022) aus elektrisch isolierendem Material besteht, bei denen maschenförmige elektrische Leiter (21, 22, 23, 24, 25, 26, 27, 28) in Form einer elektrisch leitfähigen Schicht auf jene Oberfläche aufgebracht sind, die den Magneten (11, 12, 13, 14, 15, 16, 17, 18) zugewandt ist, und wobei jeder Leiter (21, 22, 23, 24, 25, 26, 27, 28) in Form einer Oberflächenschicht, die aus einem elektrisch leitfähigen Material besteht, mindestens einen radialen Abschnitt (21', 22', 23', 24', 25', 26', 27', 28') umfasst, der sich radial mit Bezug auf die Wicklungsscheibe (201, 202) erstreckt und dafür ausgebildet ist, mit Magneten (11, 12, 13, 14, 15, 16, 17, 18) zusammenzuwirken, und zusätzlich zu dem sich radial erstreckenden Abschnitt außerdem einen weiteren Abschnitt (21", 22", 23", 24", 25", 26", 27", 28") umfasst, der sich in der Umfangsrichtung der Wicklungsscheibe (201, 202) erstreckt, und wobei die Leiter (21, 22, 23, 24, 25, 26, 27, 28) miteinander durch zweckmäßige Verbinder (29) verbunden sind, die sich durch jede entsprechende Wicklungsscheibe (201, 202) erstrecken, und **dadurch gekennzeichnet, dass** ein Hall-Sensor (3) in mindestens eine Wicklungsscheibe (201, 202) der Wicklungsanordnung (2) in dem Bereich zwischen den Leitern (21, 22, 23, 24, 25, 26, 27, 28) integriert ist, wobei der Sensor (3) in der Lage ist, ein Magnetfeld zu detektieren.

2. Elektromotor nach Anspruch 1, **dadurch gekennzeichnet, dass** drei gleichmäßig beabstandete magnetische Scheiben (101, 102, 103) innerhalb des Gehäuses (10) verfügbar sind, wobei jede magnetische Scheibe (101, 102, 103) mit Magneten (11, 12, 13, 14, 15, 16, 17, 18) auf der oder den Seiten ausgestattet ist, die den anderen zwei magnetischen Scheiben (101, 102, 103) zugewandt sind, wobei in die Spalten zwischen den magnetischen Scheiben (101, 102, 103) zwei Wicklungsscheiben (201, 202) eingesetzt sind, die zu der Wicklungsanordnung (2) gehören, und die jeweils aus mindestens zwei Schichten (2011, 2012; 2021, 2022) in Form von gedruckten Leitern bestehen, wobei jede Schicht (2011, 2012; 2021, 2022) mit Leitern (21, 22, 23, 24, 25, 26, 27, 28) versehen ist, die darin integriert sind und radiale Abschnitte (21', 22', 23', 24', 25', 26', 27', 28') enthalten, die dafür ausgebildet sind, mit den Magneten (11, 12, 13, 14, 15, 16, 17, 18) zusammenzuwirken, und in der Umfangsrichtung der Wicklungsscheibe (201, 202) relativ zu radialen Abschnitten (21', 22', 23', 24', 25', 26', 27, 28'), die in jede benachbarte Schicht (2011, 2012; 2021, 2022) integriert sind, versetzt sind.

3. Elektromotor nach Anspruch 2, **dadurch gekennzeichnet, dass** die radialen Abschnitte (21', 22', 23', 24', 25', 26', 27', 28') der Leiter (21, 22, 23, 24, 25, 26, 27, 28) in allen verfügbaren Schichten (2011, 2012; 2021, 2022) in einer solchen Weise versetzt sind, dass die radialen Abschnitte (21', 22', 23', 24', 25', 26', 27', 28') aller Schichten in einem gleichmäßigen Abstand (β) voneinander entfernt sind, das heißt, gleichmäßig in der Umfangsrichtung jeder Wicklungsscheibe (201, 202), die aus den Schichten (2011, 2012; 2021, 2022) besteht, beabstandet sind.

## Revendications

1. Moteur électrique, nommément un moteur sans balais à commutation électronique, comprenant un logement (10) cylindrique sensiblement plat consistant en un matériau non magnétique, à l'intérieur duquel un arbre (20) est intégré, auquel un ensemble (2) d'enroulement est fixé avec la possibilité de transmission de couple, lequel ensemble (2) d'enroulement comprend des conducteurs (21, 22, 23, 24, 25, 26, 27, 28) qui sont adaptés à coopérer avec un ensemble (1) magnétique qui est doté d'aimants (11, 12, 13, 14, 15, 16, 17, 18) et est fermement fixé au logement (10), dans lequel ledit ensemble (1) magnétique comprend un nombre prédéterminé d'aimants (11, 12, 13, 14, 15, 16, 17, 18) permanents qui sont fixés à au moins deux disques magnétiques (101, 102, 103) de type plaque, facultativement des anneaux, qui sont fixés au logement (10) et sont espacés les uns des autres dans le sens axial de l'arbre (20), et dans lequel, sur chaque disque magnétique (101, 102, 103), lesdits aimants (11, 12, 13, 14, 15, 16, 17, 18) s'étendent radialement par rapport à chaque disque magnétique (101, 102, 103) correspondant, et dans lequel au moins un disque (201, 202) d'enroulement est inséré à l'intérieur de l'espace entre chaque paire de disques magnétiques (101, 102, 103) voisins avec des aimants (11, 12, 13, 14, 15, 16, 17, 18) et est avec la possibilité de transmission de couple, fixé à l'arbre (20) et adapté à coopérer avec des aimants (11, 12, 13, 14, 15, 16, 17, 18) sur chaque disque magnétique (101, 102, 103) voisin, **caractérisé en ce que** des aimants (11, 12, 13, 14, 15, 16, 17, 18) sur chaque disque magnétique (101, 102, 103) sont espacés de façon équidistante les uns des autres dans le sens circonférentiel du disque magnétique (101, 102, 103), où chaque disque (201, 202) d'enroulement est constitué d'un conducteur imprimé multicouche qui appartient audit ensemble (2) d'enroulement, dans lequel chaque disque (201, 202) d'enroulement consiste en au moins deux couches (2011, 2012 ; 2021, 2022) de conducteurs imprimés, chaque couche (2011, 2012 ; 2021, 2022) consistant en un matériau d'isolation électrique, sur lequel des conducteurs (21, 22, 23, 24, 25, 26, 27, 28) électriques en forme de maillage sous la forme de couche électro-conductrice sont appliqués sur la surface qui fait face vers lesdits aimants (11, 12, 13, 14, 15, 16, 17, 18), et dans lequel chaque conducteur (21, 22, 23, 24, 25, 26, 27, 28) sous la forme d'une couche superficielle consistant en un matériau électro-conducteur comprend au moins une section radiale (21', 22', 23', 24', 25', 26', 27', 28') qui s'étend radialement par rapport audit disque (201, 202) d'enroulement et est adaptée à coopérer avec des aimants (11, 12, 13, 14, 15, 16, 17, 18), et, outre ladite section s'étendant radialement, également une autre section (21", 22", 23", 24", 25", 26", 27", 28") qui s'étend dans le sens circonférentiel du disque (201, 202) d'enroulement, et dans lequel les conducteurs (21, 22, 23, 24, 25, 26, 27, 28) sont interconnectés les uns avec les autres au moyen de connecteurs (29) appropriés, qui s'étendent au travers de chaque disque (201, 202) d'enroulement correspondant, et **en ce qu'**un capteur (3) à effet Hall est intégré sur au moins un disque (201, 202) d'enroulement de l'ensemble (2) d'enroulement dans la zone entre les conducteurs (21, 22, 23, 24, 25, 26, 27, 28), dans lequel ledit capteur (3) est apte à détecter le champ magnétique.

2. Moteur électrique selon la revendication 1, **caractérisé en ce que** trois disques magnétiques (101, 102, 103) espacés de façon équidistante sont disponibles dans le logement (10), dans lequel chaque disque magnétique (101, 102, 103) est doté d'aimants (11, 12, 13, 14, 15, 16, 17, 18) sur le/les côté(s) qui fait/font face vers les deux autres disques magnétiques (101, 102, 103), dans lequel, dans les espaces entre lesdits disques magnétiques (101, 102, 103), deux disques (201, 202) d'enroulement sont insérés, qui appartiennent à l'ensemble (2) d'enroulement, et chacun d'entre eux consiste en au moins deux couches (2011, 2012; 2021, 2022) sous la forme de conducteurs imprimés, dans lequel chaque couche (2011, 2012 ; 2021, 2022) est dotée de conducteurs (21, 22, 23, 24, 25, 26, 27, 28), qui sont intégrés dans celle-ci et incluent des sections radiales (21', 22', 23', 24', 25', 26', 27', 28'), qui sont adaptés à coopérer avec lesdits aimants (11, 12, 13, 14, 15, 16, 17, 18) et sont décalés dans le sens circonférentiel du disque (201, 202) d'enroulement par rapport à des sections radiales (21', 22', 23', 24', 25', 26', 27', 28') intégrées au sein de chaque couche (2011, 2012 ; 2021, 2022) voisine.

3. Moteur électrique selon la revendication 2, **caractérisé en ce que** les sections radiales (21', 22', 23', 24', 25', 26', 27', 28') des conducteurs (21, 22, 23, 24, 25, 26, 27, 28) au sein de toutes les couches (2011, 2012 ; 2021, 2022) pouvant être disposées sont décalées de telle manière que les sections radiales (21', 22', 23', 24', 25', 26', 27', 28') de toutes les couches sont agencées à une distance (β) uniforme les unes des autres, à savoir de manière équidistante dans le sens circonférentiel de chaque disque (201, 202) d'enroulement qui consiste en lesdites couches (2011, 2012 ; 2021, 2022).
